# EUROPEAN PATENT APPLICATION

(11) **EP 0 962 168 A1**
(43) Date of publication of application: **08.12.1999**
(21) Application number: 98122463.7
(22) Date of filing: 26.11.1998
(51) Int. Cl.: A47B 47/02

(54) **Storage cabinet and method of assembling same**

(30) Priority: 04.06.1998 US 87910 P; 24.11.1998 US
(71) Applicant: Siam Furniture Holdings Ltd. c/o Commonwealth Trust Ltd., Torola (VG)
(72) Inventor: Anderson, William C., Sukapiban 3 Bangkok, 10240 Thailand (TH)
(74) Representative: Klunker . Schmitt-Nilson . Hirsch

(57) **Abstract**

A ready-to-assemble storage cabinet includes a pair of metal-formed side walls and a back wall transversely connected to a top and bottom wall and secured thereto by posts depending from an interior surface of the top and bottom walls received in channels defined on an interior surface of the side walls, and fasteners on either the bottom or side and back walls to prevent withdrawal of the posts from within the channels. The front wall can be provided with drawers, doors or other components to complete the assembly as desired. Further provided is a method of assembling the cabinet wherein the posts on the top and bottom walls are inserted within the channels on the side walls and are fastened thereto to prevent withdrawal of the posts from the channels.

## Description

### BACKGROUND OF THE INVENTION

### Field of the Invention

The present invention relates to a storage cabinet and, more particularly, to a ready-to-assembly storage cabinet including filing cabinets, storage cabinets, lateral filing cabinets and pedestal cabinets which can be easily assembled and disassembled.

### Description of the Prior Art

"Ready-to-assemble" or "knock-down" storage cabinets, including filing and storage cabinets, are well known in the art. Such cabinets are used for a broad variety of storage applications in the home and office environments. It is important in ready-to-assemble storage cabinets that they are versatile and easy to assemble and disassemble. Furthermore, it is necessary that such ready-to-assemble storage cabinets be durable, both in structure and finish, and lightweight so that the cabinet can be packaged into a carton of minimal size so as to occupy a minimal storage volume in the disassembled state to keep shipping and warehousing costs low.

There are many ready-to-assemble storage cabinets made from wood products, but many have proven to be unreliable with regard to durability. Moreover, such ready-to-assemble storage cabinets made of wood tend to be heavier than similar structures made of metal. Also, many prior art storage cabinets require that the person assembling the unit to assemble the product using many fasteners and have access to many tools, including a drill which can be substantially increase the cost of assembly. Such requirements also add to the length of time for assembling the storage cabinets, and add to the frustration of the assembler when such assembly is required in a short period of time.

Even though ready-to-assemble storage cabinets requiring no more than the use of simple hand tools include unsightly connections visible on the exterior of the storage cabinet. Such visible connections are distracting to the aesthetics of a completed product.

More particularly concerning the relative weight of storage systems made from wood and metal, a wood-fabricating storage system increases freight, warehouse, and floor turn rate costs by substantial amounts. This, in turn, increases the cost of the product to a consumer.

Prior art ready-to-assemble filing cabinets also tend to require specially-configured fasteners, which may not meet a particular region's safety and structural standards, as well as a manufacturing company's particular manufacturing, construction, or assembly processes. Thus, by requiring particular fasteners for assembling the ready-to-assemble storage system, manufacturers of the prior art devices have raised costs of assembly and related fastener inventory levels that the manufacturers maintain. Furthermore, acquiring particular fasteners in the event one is broken or lost may be difficult or even impossible thus preventing the proper use of the cabinet.

Further, it is also know to manufacture storage cabinets from metal. However, these storage cabinets are typically assembled by welding adjacent components together in a permanent fashion. These cabinets, once permanently assembled, require a substantial amount of shipping volume during transportation of the cabinet from the manufacturer's site to the consumer.

Particularly, U.S. Patent No. 3,788,242 issued to Hassel et al. discloses a shelving unit which includes a top, a base and at least one intermediate shelf, all of which have vertical stubs at their corners for attachments to uprights consisting of sheet metal profiled sections. However, open sided shelving units are not faced with the several problems associated with cabinets and the like referred hereinabove. Particularly, the corner stubs consist of u-shaped sections with these u-shaped sections being required to be of a length which will maintain the lateral and rotational stability of the shelving unit in the absence of a continuous side wall construction.

U.S. Patent No. 5,441,337 issued to Mazura discloses a component cabinet comprising a stand in the form of a frame and a number of panel elements, namely side panels, floor panels, ceiling panels, a rear wall and a door which form the component cabinet. However, as can be readily appreciated from the component cabinet referred to therein, the cabinet initiates with a sub frame which can not be readily assembled and disassembled for supporting the number of components which make up the outer periphery of the component cabinet. These numerous components as well as their inherent hardware make the assembly and disassembly of such a cabinet cumbersome and significantly adds to the overall costs of storage of such a component cabinet.

As to U.S. Patent No. 4,691,644 issued to Frydman, a rigid frame structure for a cabinet or the like is set forth, however, as noted hereinabove, this frame structure requires the use of particular fasteners for engaging the several components with one another which may raise the costs of manufacturing and assembling such a cabinet as well as increase the risk of the cabinet becoming obsolete due to the breaking or loss of a particular fastener.

A still further type of knock down cabinet is set forth in U.S. Patent No. 4,836,626 issued to Taylor. However, the construction of the knock down cabinet requires the precise inner fitting of the side and back panels and results in an elongated seam adjacent the corners of the cabinet. When maneuvering and manipulating such a cabinet, these seams can become exposed and be of a hazard to the person either erecting or moving the cabinet.

Clearly, there is need in the art for a readily assembled cabinet of the type discussed in detail hereinbelow which can be easily assembled and disassembled using intact or conventional fastening mechanisms, which does nut present a hazard to the person assembling or disassembling the cabinet and which when disassembled minimizes the storage space necessary for storing or transporting such a cabinet.

### SUMMARY OF THE INVENTION

A primary object of the present invention is to overcome the aforementioned shortcomings associated with prior art storage cabinets.

A further object of the present invention is to provide a storage cabinet including filing cabinets, storage cabinets, lateral filing cabinets and pedestal cabinets which can be easily assembled and disassembled.

A further object of the present invention is to provide a storage cabinet which can be readily assembled and disassembled in a safe manner.

Yet another object of the present invention is to provide a storage cabinet when disassembled minimizes the storage space required for storing or transporting such cabinet.

A still further object of the present invention is to provide a storage cabinet which when assembled provides for reliable and secure attachment of the several components forming the cabinet.

A ready-to-assemble storage cabinet includes a pair of metal-formed side walls and a back wall transversely connected to a top and bottom wall and secured thereto by posts depending from an interior surface of the top and bottom walls received in channels defined on an interior surface of the side walls, and fasteners on either the bottom or side and back walls to prevent withdrawal of the posts from within the channels. The front wall can be provided with drawers, doors or other components to complete the assembly as desired. The invention also relates to a method of assembling the cabinet wherein the posts on the top and bottom walls are inserted within the channels on the side walls and are fastened thereto to prevent withdrawal of the posts from the channels.

Particularly, the present invention may include fasteners of a particular type including a locking tab and aperture provided on either the post and channels or the side wall, bottom wall and top walls for securing the walls with respect to other another. More particularly, the locking tab in the form of a snap retainer may be provided in the post and the aperture provided in the channel for receiving the snap retainer when inserted therein. Additionally, a plurality of snap retainers may be provided along a top and bottom edge of the side and back panels while corresponding apertures are formed along corresponding edges of the bottom and top panels for receiving snap retainers of the side wall and back wall.

As noted hereinabove, drawers and doors may be provided to complete the assembly. The drawers may be slidably received between the side walls of the cabinet while doors may be hingedly connected adjacent to the side walls. Particularly, the doors may be hingedly connected to the top wall and bottom wall adjacent the side wall by way of a fixed pin and a retractable and extendable pin which allows the door to be readily connected and disconnected from the assembly.

These as well as additional advantages of the present invention will become apparent from the detailed description of the present invention when read in light of the several figures.

### BRIEF DESCRIPTION OF THE DRAWINGS

Fig. 1 is a perspective view of a first embodiment of a ready-to-assemble storage cabinet (pedestal unit) according to the invention in an assembled state;
Fig. 2 is an exploded view of the ready-to-assemble pedestal unit of Fig. 1 comprising top, bottom, and side walls interconnected to form the assembled unit shown in phantom outline;
Fig. 3 is a partial, exploded perspective view of the connection between a side wall and a bottom wall of the ready-to-assemble pedestal unit of Figs. 1 and 2;
Fig. 3A is a partial, exploded perspective view of the connection between a side wall and bottom wall of the ready-to-assemble pedestal unit in accordance with an alternative embodiment of the present invention.
Fig. 3B is a partial, exploded perspective view of the connection between a side wall and bottom wall of the ready-to-assemble pedestal unit in accordance with an alternative embodiment of the present invention.
Fig. 4 is an exploded view of a second embodiment of a ready-to-assemble storage cabinet according to the invention;
Fig. 5 is a partial perspective view of the connection of the side wall and bottom wall of the ready-to-assemble storage cabinet of Fig. 4;
Fig. 6 is a cross-sectional view taken along line 6-6 of Fig. 5;
Fig. 7 is a partial perspective view of the mounting of a hinged door assembly onto the ready-to-assemble storage cabinet shown in Figs. 4-6;
Fig. 8 is a partial perspective view of a hinge pin assembly used with the hinged door shown in Fig. 7 for the ready-to-assemble storage cabinet of Figs. 4-6;
Fig 9 is an exploded view of a third embodiment of a ready-to-assemble storage cabinet (filing cabinet) according to the invention; and
Fig. 10 is a partial perspective view of a mounting between the side wall and bottom wall of the ready-to-assembly storage cabinet of Fig. 9.

### DETAILED DESCRIPTION OF THE INVENTION

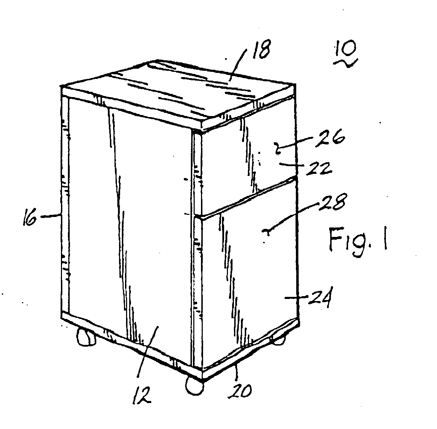

With reference to the drawings, a first embodiment of a ready-to-assemble storage cabinet 10 according to the present invention is shown in Figs. 1-3. The storage cabinet 10, shown in Figs. 1-3 as a pedestal unit, includes a pair of side walls 12 and 14 and a back wall 16 secured to the periphery of a top wall 18 and a bottom wall 20, which together define a storage space in the interior thereof. A pair of drawers 22, 24 substantially fill the storage space and include respective fronts 26, 28 which together defines a front wall 30. Preferably, the walls 12-20 and drawers 22-24 are made from metal in a conventional manufacturing process and are packaged in a disassembled or ready-to-assemble state. Thus, all of the components of the storage cabinet 10 occupy a minimal storage volume during shipping and can be unpackaged and assembled with a minimal number of fasteners in a relatively short period of time.

It will be understood that, although a two-drawer pedestal unit is shown in Figs. 1-3, the concepts embodying this invention relate to the interconnection of the walls 12-20 of the cabinets 10 so that any specific configuration of the cabinet 10 can be employed without departing from the scope of this invention. Thus, a cabinet 10 of any height, aspect ratio, and other features such as drawers, doors, wheels, etc. can be assembled in accordance with the mounting structures and assembly methods disclosed herein.

Each side wall 12, 14 includes a pair of parallel hollow channels 32 extending longitudinally adjacent to a forward and rearward vertical edge, respectively, on an inner face thereof for receiving a corresponding aligned securing post 34 depending from an inner face of both the top wall 18 and bottom wall 20. Each side wall 12 and 14 thereby generally comprises a panel sized appropriately for the cabinet 10 having a forward and rearward vertical edge reversely bent to form the channels 32 which extend along the forward and rearward edges thereof. The top wall 18 and bottom wall 20 each generally comprises a panel having posts 34 depending downwardly and extending upwardly, respectively, and aligned with the channels 32 on the walls 12, 14. Furthermore, a series of apertures 33 can be provided in the back wall 18 along its vertical edges for receiving fasteners 35 that can be mounted therethrough to aligned apertures (not shown) in the rearmost channels 32, and in a corresponding post 34 within the channel 32 where it aligns with a corresponding aperture 33.

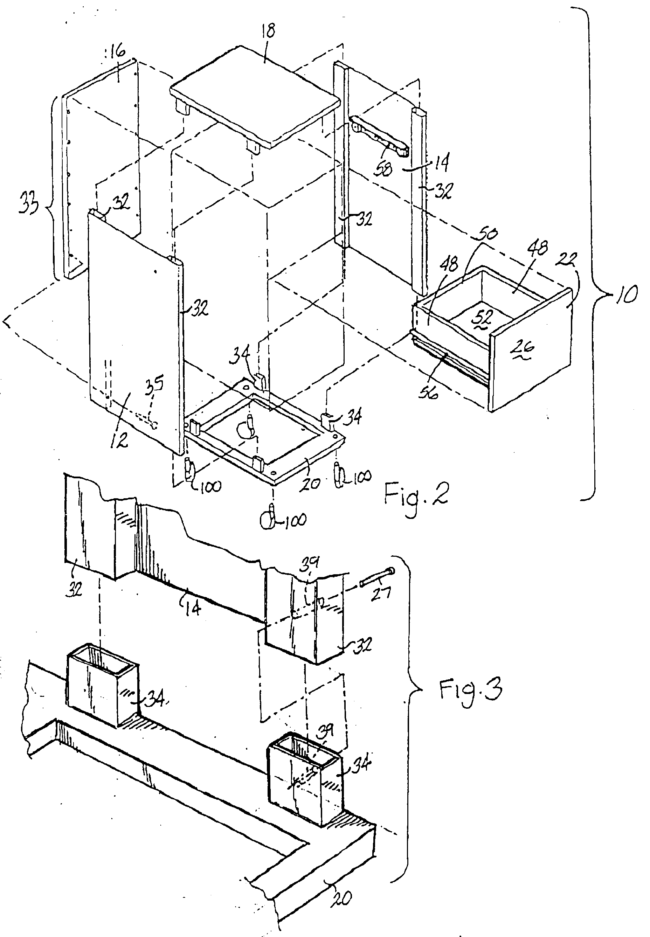

Each drawer 22, 24 includes side walls 48 and a back wall 50 together extending transversely from a bottom wall 52 to define a storage space with the fronts 26, 28, which extend transversely upward as well, of the drawers 22, 24, respectively. As drawn in Fig. 2, the drawer 22, which is suitable for holding files, is deeper than the drawer 24, which is suitable for holding cards of miscellaneous supplies. As is well known in the art, each drawer 22, 24 includes a slide 56 mounted to a side wall 48 for sliding on a bearing surface, such as rollers 58 mounted to an inside surface of the side walls 12, 14. Of course, other slide assemblies such as friction slides, rolling wheel slides, cradle slides, or ball bearing slides might be used. Furthermore, each drawer 22, 24 can include a pull handle (not shown) on its respective front 26, 28 for aiding a user and opening and closing the drawers 22, 24.

An exterior surface of the bottom wall 20 can include supports, such as a glide, a leveler, or a caster, mounted as is conventional to the four corners of the bottom wall 20. As shown, the bottom wail 20 includes casters 100.

To assemble the pedestal unit 10, the user simple lays the bottom wall 20 on a flat surface with the posts 34 painting upwardly, and then placing each of the side walls 12, 14 over the posts 34 so that they are received in the channels 32. The posts 34 stabilize the side walls 12, 14 during assembly.

Fasteners 27, such as screws or rivets, can be inserted through aligned mounting apertures 39 in the channels 32 and posts 34 to more securely mount the side walls 12, 14 to the bottom wall 20.

Other commonly known fasteners can be used to secure the posts 34 within the channels 32 in the spirit of the invention. These include rivets, including pop rivets, spring clips, expanding wedges, cam devices, including post and cam, and snap retainers.

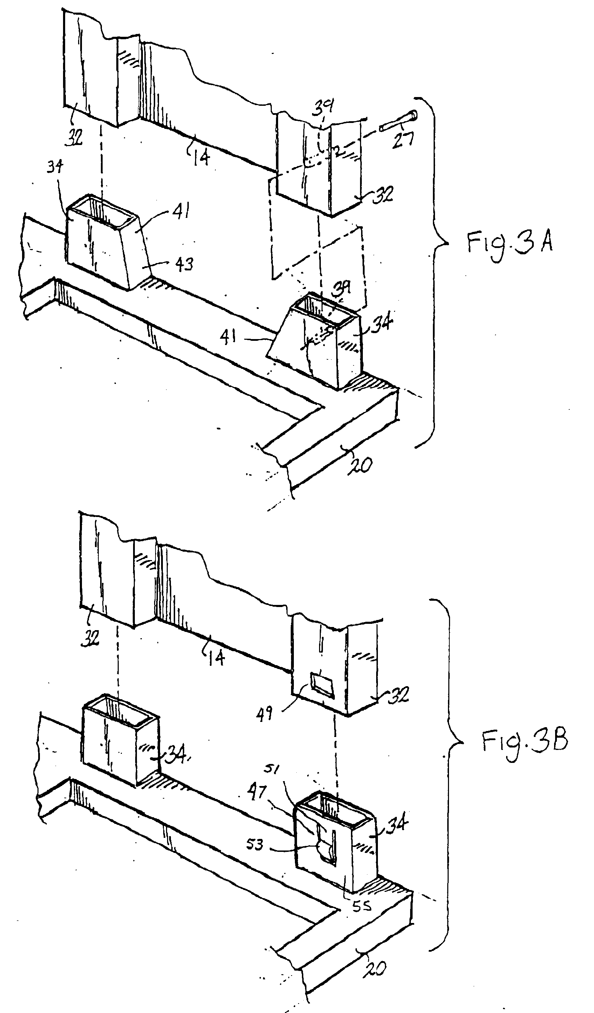

For example, as shown in Fig. 3A the post 34 can include an inclined surface 41 defining a ramped end 43, this ramp being exaggerated for the purpose of clarity in Fig. 3A. In this embodiment, the post 34 is wider than the channel 32. Thus, upon insertion of the post 34 into the channel 32, the inclined surface 41 cams against an edge of the channel 32 to guide the post 34 to a friction fit within the channel 32. A fastener 27 such as a screw or rivet may be used in addition to the cam device.

Another example shown in Fig. 3B is a post 34 having a snap retainer 47, and a channel 32 having an aperture 49 for receiving the snap retainer 47. Upon insertion of the post 34 into the channel 32, the snap retainer 47, including a spring arm 51 having a locking tab 53 at its distal end is received in the aperture 49. As the post 34 is being slide into the channel 32, the spring arm 51 flexes inwardly so that the tab 53 is flush with an exterior surface 55 of the post surrounding the snap retainer 47. When the snap retainer 47 is aligned with the aperture 49, upon full insertion of the post 34, the sprint arm 51 returns to its normal outward bias and the tab 53 fills the aperture 49 and blocks the post against movement relative to the channel. The post 34 can be removed from the channel 32 by flexing the spring arm 51 inwardly to clear the tab 53 of the aperture 49.

The back wall 16 is simply laid over the rear edge of the bottom wall 20 and held in place by conventional fasteners 35 threaded through the aligned apertures 33 of the back wall 16 and the rearmost channels 32 of the side walls 12, 14 and through a post 34 to the extend that the post 34 disposed within the channel 32 aligns with one or more of the apertures 33. The top wall 18 is placed atop upper edges of the side walls 12, 14 and the back wall 16, whereupon the post 34 depending from the interior surface of the side walls 12, 14 are received in the channels 32 along the upper forward and rearward portions of each of the side walls 12, 14. Conventional fasteners, such as those shown at 35, can further secure the post 34 within the channels 32. As described above, other fasteners can be used without departing from the scope of this invention.

The drawers 22, 24 are assembled such that the respective fronts 26, 28 and sides 48 and back wall 50 define a storage space about the perimeter of the bottom wall 52 thereof. The walls 48, 50, 52 are respective front 26, 28 are preferably secured to one another by adhesive such as glue, welding, or conventional fasteners, such as screws or rivets or by any other fastening methods or means which are known in the art and suitable for mounting one component to another.

The guide rails 56 are mounted to each side wall 48 of each drawer 22, 24, and are received on the rollers 58 which allow the drawer to extend from the retract within the storage space defined by the wide walls 12, 14 top and bottom walls 18, 20, and back wall 16. The guide rails 56 and rollers 58 are secured to the cabinet side walls 12, 14, and drawer side walls 48, respectively, by conventional fasteners such as screws or rivets or, alternatively, by welding or by any other fastening method or means which are known in the art and suitable for mounting one component to another.

The storage cabinet 10 can be used as a pedestal for supporting a work surface thereon, or can be hung or suspended from the desk, such as on a bracket mounted to vertically-aligned slots, often referred to as vertical hanging intelligence, as is known in the art. Furthermore, the storage cabinet 10 can be used alone as a freestanding cabinet. The storage cabinet 10 can be made mobile, such as by the inclusion of casters 100 mounted to an underside surface of the bottom wall 20. Finally, the storage cabinets 10 can be supported on a vertical surface, such as on an existing wall.

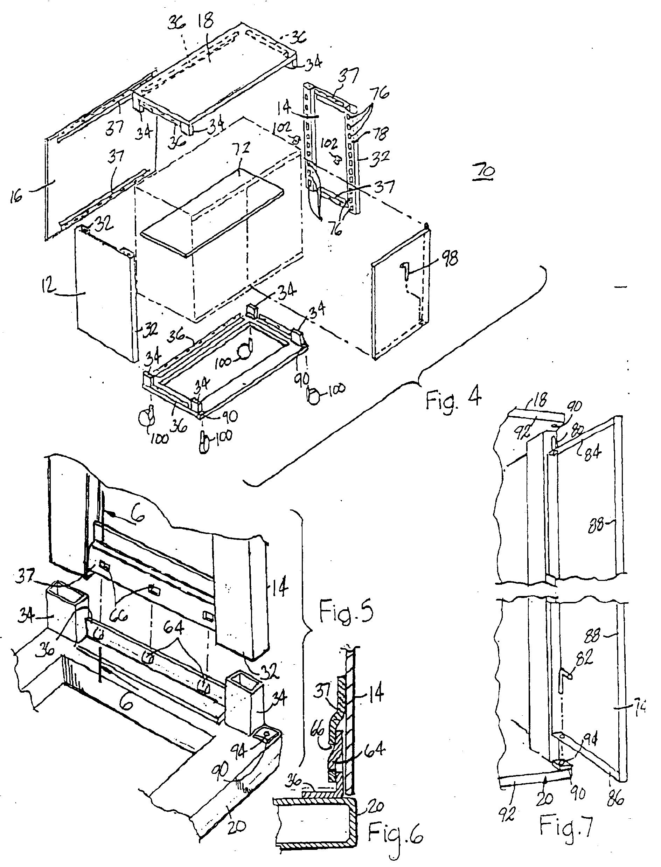

A second embodiment of the ready-to-assemble storage cabinet according to the invention is shown generally by reference numeral 70 in Figs. 4-8/ The design construction of the storage cabinet 70 is similar to that described for the pedestal unit 10 whereby the top and bottom walls 18 and 20 are provided with the posts 34 and the side walls 12, 14 have the vertically elongated channels 32 which receive the posts 34. Thus, the above description is incorporated herein and the like elements have the same numeral.

The storage cabinet unit 70 includes at least one storage shelf 72 mounted within the storage space defined by side walls 12, 14, back wall 16 and top and bottom walls 18, 20. The shelf 72 can either by fixedly mounted to one or more of the side walls 12, 14 and the back wall 16 or can be adjustably mounted on support tables 102 as described below. Furthermore, the front wall is defined by a pair of hinged doors 74, which are shown with more particularity in Fig. 7.

According to this embodiment of the invention, side edges of each of the top and the bottom walls 18 and 20 include an upstanding flange 36 disposed between the posts 34 located thereon. A rear edge of the top and bottom walls 18 and 20 also include an upstanding flange 36. An upper and a lower edge of each of the side walls 12, 14 and back wall 16 each includes a mating slot 37 adapted to securely receive the flange 36 on an aligned top or bottom wall 18, 20. It will be understood that, as the posts 34 on the top and bottom walls 18 and 20 are received within the channels 32 on the side walls 12. 14 the interlocking of the flanges 36 on the top and bottom walls 18 and 20 within the mating slots 37 on the side walls 12, 14 and the back wall 16 prevents the top and bottom walls 18 and 20 from being dislodged from the side walls 12, 14 and the back wall 16 thereby easing assembly.

Each flange 36 can include a series of tabs 64 and each slot 37 can have a series of apertures 66 aligned with, and corresponding to, the space of the tabs 64 on the flange 36. Each of the tabs 64 on thy flange 36 is adapted to be received in a corresponding aperture 66 of each mating slot 37 when in the assembled position, as best illustrated in Figs. 5-6. For example, as the flange 36 is moved within the slot 37, the tabs 64 deflect again the slot 37 until each of the tabs 64 aligns with a corresponding aperture 66. The tabs 64 can be thereby return to their undeflected position with an aperture 66 to prevent withdrawal of the flange 36 from the slot 37.

The inside surface of the side walls 12, 14 include a series of mounting apertures 76 formed in a narrow wall 78 defining in part the channel 32. As is common in the art, the apertures 76 receive adjustable shelf support tabs 102 therein for supporting the shelf 72 at the desired height. Thus, by placing the mounting tabs 102 in a series of four mounting apertures disposed within the same plane, the storage shelf 72 is supported parallel to that plane. The shelf 72 is then simple adjustable by changing the plane in which the tabs 102 engage within corresponding mounting apertures 76. While only one shelf 72 is illustrated and described, several shelves 72 can be included without departing from the scope of this invention.

The hinged door 74, as best shown in Figs. 7-8, includes a hinge pin and a securing hinge pin 82 located at top and bottom ends 84, 86 respectively, of an inside edge 88 of each door 74. The pins 80, 82 are received within retainers 90 mounted coaxially within front portions 92 of the top and bottom walls 18, 20. The front portions 92 of each wall 18, 20 extend outwardly from the side walls 12, 14 approximately the width of the hinged doors 74. The retainers 90 include apertures 94 therein for receiving the hinge pin 80, 82.

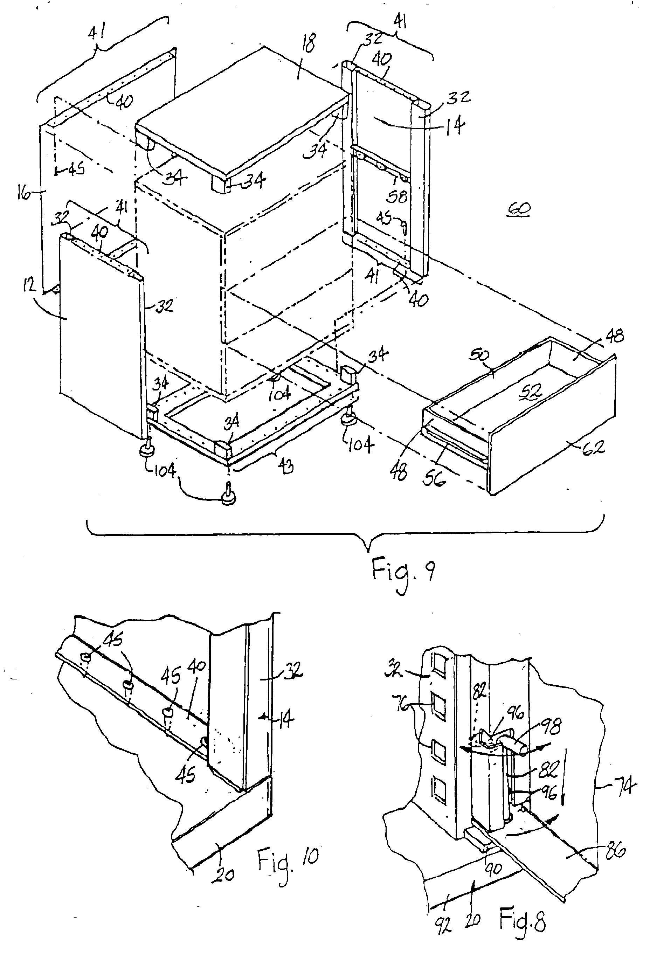

More particularly concerning the securing hinge pin 82, as best shown in Fig. 8, it is slidably received in a generally Z-shaped slot 96 and includes a securing handle 98 for rotating the hinge pin 82 between a first, pre-installation position at the top of the Z-shaped slot 96, as shown in Fig. 4, and a second securing position at the bottom of the Z-shaped slot 96. Thus, in the pre-installation position, the handle 98 of the hinge pin 82 is moved upwardly and to the left in the orientation shown in Fig. 8, such that hinge pin 82 is lifted and held within the confines of the door 74. After the door 74 is in position for installation by aligning the pin 82 with the aperture 94 in the retainer 90 on the bottom wall 20, the installer simply moves the handle 98 to the right and downwardly to lower the pin 82 within the aperture 94 of the retainer 90. While not shown, the securing hinge pin 82 can be secured in this lower, installation position by a conventional latch or a detent.

To assemble the storage cabinet 70, the user simply lays the bottom wall 20 on a flat surface with the posts 34 and the flanges 36 extending upwardly. The channels 32 and slots 37 of the side walls 12, 14, and back wall 16 are located over the posts 34 and flanges 36. The side walls 12, 14 and back wall 16 are moved downwardly so that the posts 34 are received within the channels 32 and the tabs 64 of each flange 36 are received with a corresponding aperture 66 of each slot 37. Together, the flanges 36 and slots 37 stabilize the walls 12, 14, 16 during assembly and provide reinforcement to the assembled cabinet 10 to prevent withdrawal of the posts 34 from the channels 32. Again, conventional fasteners, such as screws or rivets, can be inserted through the flange and slot assembly to further secure them in place.

The top wall 18 is placed over the side walls 12, 14 and back wall 16 upon the bottom wall 20, whereupon the posts 34 and the flanges 36 extending downwardly therefrom are received in the channels 32 and the slots 37, respectively. Again, the tabs 64 are received in the aligned aperture 66 so as to lock the flanges 36 within the mating slots 37, respectively, and prevent withdrawal of the posts 34 from the channels 32.

The hinge door 74 is mounted to front edges of the top and bottom walls 18, 20 by placing them in a position so that the hinge pin 80 can be slid into the retainer 90 in the top wall 18. With the handle 98 in the preinstallation position, the bottom of the door 74 is placed over the retainer 90 in the bottom wall 20. The handle 98 of the door 74, being in position for installation, is moved to the right and downwardly to lower the pin 82 within the aperture 94 of the retainer 90, whereupon the door 74 is installed for use.

While a particular size storage cabinet 70 has been shown, various sizes and configurations should be obvious to one of skill in the art. For example, while two hinged doors 74 are shown, it is within the scope of the invention to include one hinged door or more than two hinged doors. Further, the hinged doors themselves may be transparent, translucent, or solid. Furthermore, instead of hinged doors, sliding doors may be used; in which case, the top and bottom edges of the doors are received and slide within guide tracks (not shown). Again, these sliding doors may be transparent, translucent, or solid. Furthermore, as with the prior embodiments discussed above, the storage cabinet unit 79 may be freestanding, mobile, or mounted to a vertical surface, such as a wall.

A third embodiment of the ready-to-assemble storage cabinet 60 is shown in Figs. 9-10 and is very similar to the embodiments shown in Figs. 1-8 in design and construction whereby the top and bottom walls 18 and 20 are provided with the posts 34 and the side walls 12, 14 have the vertically elongated channels 32 which receive the posts 34. Thus, the above description is incorporated herein and like components are numbered the same.

The storage cabinet unit 60 as shown includes three drawers 62 defining the front wall, but can include, in the spirit of the invention, any number of drawers typically between one and five or more. Much like the storage cabinet 10 of Figs. 1-3, the filing cabinet unit 60 can be supported on a vertical surface, such as a wall, or maybe a freestanding or mobile filing cabinet unit 60. The cabinet unit 60 is shown with gliders 104 as are know in the art for supporting furniture on a floor surface.

Each side wall 12, 14 and back wall 16 includes a pair of transversely extending flanges 40 on an inner face thereof for securing the top and bottom walls 18, 20. The flanges 40 are located between the channels 32 on the side edges of the side walls 12, 14. As illustrated, the flange 40 includes a series of apertures 41 that, when assembled, align with apertures 43 in the top and bottom walls 18, 20 and receive fasteners 45 therethrough for securing the top and bottom walls 18, 20 to the side walls 12, 14 and back walls 16, respectively, and preventing withdrawal of the posts 34 from the channels 32 when the cabinet 60 is assembled.

The bottom wall 20 is also shown having a series of apertures about its perimeter aligned with the apertures in the flanges 40 along the bottom surfaces of the side walls 12, 14 and back wall 16 for mounting the bottom wall 20 to the assembled walls 12, 14, 16 and 18.

The filing cabinet 60 is assembled in much the same way as the pedestal unit 10, except that the side walls 12 and back wall 16 are secured to the bottom wall 20 and to wall 18 by aligning the apertures in the flanges 40 with the apertures in the top and bottom walls 18, 20, respectively and securing the components to one another with fasteners 45 to prevent withdrawal of the posts 34 from within the channels 32, as best shown in Fig. 10. As described before, the drawers 62, which after assembly, are slidably mounted within the space defined by the cabinet unit 60 walls upon conventional hardware, as was described above.

Concerning all of the embodiments described herein, the front wall has been shown comprising drawers fronts that are flush with a front portion of the top and bottom walls 18, 20 and concealing the front portions of the side walls 12, 14. It is important to note that the storage units according to the invention can be constructed so that all front portions of the walls 12, 14, 18, 20 are hidden by the drawers, so that the front portions of the top and bottom walls 18, 20 are hidden while the front portions of the side walls 12, 14 are shown. Thus, the drawer front may be constructed to be flush or recessed relative to a front portion of the walls 12, 14, 18, 20.

All of the embodiments of the invention described heroin include the provision of posts 34 on the upper and lower walls of the cabinet which are received within channels 32 in one or more of the vertical walls defining the invention. It will be understood that he location of the channels 32 and the posts 34 can be reversed, such as providing the channels 32 on top and bottom walls 18 and 20 and the posts 34 on the side walls 12, 14 without departing from the scope of this invention.

While the invention has been specifically described in connection with certain specific embodiments thereof, it is to be understood that this is by way of illustration and not of limitation, and the scope of the appended claims should be construed as broadly as the prior art will permit.

## Claims

1. A ready-to-assemble storage cabinet comprising:
a top wall having at least one of a post and a channel;
a bottom wall having at least one of a post and a channel;
a side wall having upper and lower portions, each of the upper and lower portions having at least one of the other of the post and channel adapted to receive the at least one of the post and the channel on the top and bottom walls;
a first fastener mounted to the top wall and to the side wall to prevent withdrawal of the post from the channel associated with the top wall;
a second fastener mounted to the bottom wall and to the side wall to prevent withdrawal of the post from the channel associated with the bottom wall;
whereby the storage cabinet can be assembled when the at least one of the post and channel of the top and bottom walls are received by the at least one of the other of the post and channel of the side wall and the first and second fasteners are mounted to the side walls and to the top and bottom walls.

2. The cabinet as defined in claim 1, further comprising a second side wall and back wall, said back wall being fixedly secured in position with respect to said side walls.

3. The cabinet as defined in claim 2, wherein said side walls include said channels, said channels being reversibly roll formed hollow channel; and are a continuation of said side walls.

4. The cabinet as defined in claim 2, wherein said first and second fasteners include at least one locking tab and at least one aperture for receiving said locking tab.

5. The cabinet as defined in claim 4, wherein said locking tab is provided in said post and said aperture is provided in said channel.

6. The cabinet as claimed in claim 4, wherein said locking tab is provided adjacent said side wall and said aperture is provided adjacent said bottom wall.

7. The cabinet as claimed in claim 4, wherein a plurality of locking tabs are provided adjacent a top and bottom edge of each of said side walls and a plurality of corresponding apertures are provided adjacent corresponding edges of said top and bottom wall for receiving said locking tabs.

8. The cabinet as claimed in claim 7, further comprising a plurality of locking tabs adjacent a top and bottom edge of said back wall and a plurality of corresponding apertures adjacent corresponding edges of said top and bottom wall for receiving said locking tabs.

9. The cabinet as claimed in claim 2, further comprising at least one drawer slidingly received between said side walls.

10. The cabinet as claimed in claim 2, further comprising at least one door forming a front wall at the cabinet.

11. The cabinet as claimed in claim 10, wherein said door is hingedly connected to at least one of said top wall, bottom wall and said side wall.

12. The cabinet as claimed in claim 11, wherein said door is connected to said top wall by a fixed pin and connected to said bottom wall by a retractable and extendable pin.

13. A method of assembling a structural storage cabinet comprising the steps of
providing a top wall having at least one of a post and a channel;
providing a bottom wall having at least one of a post and a channel;
providing a side wall having upper and lower portions, each of the upper and lower portions having at least one of the other of the post and channel adapted to receive the at least one of the post and the channel on the top and bottom walls;
inserting the at least one of the post and channel on the top wall into the other of the post and channel on the side wall;
inserting the at least one of the post and channel on the bottom wall into the other of the post and channel on the side wall;
fastening the top wall to the side wall to prevent withdrawal of the post from the channel; and
fastening the bottom wall to the side wall to prevent withdrawal of the post from the channel.

14. The method as defined in claim 13, further comprising the step of providing a second side wall and a back wall, and fixedly securing said back wall with respect to said side walls, said top wall and said bottom wall.

15. The method as defined in claim 14, further comprising the step of providing a second side wall and a back wall, and fixedly securing said back wall with respect to said side walls, said top wall and said bottom wall, and positioning said side wall, said top wall and said bottom wall such that said locking tab is received in said aperture.

16. The method as defined in claim 15, wherein said locking tab is provided in said post and said aperture is provided in said channel.

17. The method as defined in claim 15, wherein said locking tab is provided adjacent said side wall and said aperture is provided adjacent said bottom wall.

18. The method as defined in claim 15, wherein a plurality of locking tabs are provided adjacent a top and bottom edge of each of said side walls and a plurality of corresponding apertures are provided adjacent corresponding edges of said top and bottom wall for receiving said locking tabs.

19. The method as defined in claim 18, further comprising a plurality of locking tabs adjacent a top and bottom edge of said back wall and a plurality of corresponding apertures adjacent corresponding edges of said top and bottom wall for receiving said locking tabs of said back wall.

20. The method as defined in claim 14, further providing at least one drawer and slidably positioning said drawer between said side walls.

21. The method as defined in claim 10, further providing at least one door and positioning said door adjacent a front of the cabinet forming a front wall.

22. The method as defined in claim 21, further comprising the step of hingedly connecting said door to at least a one of said top wall, said bottom wall and said side walls.

23. The method as defined in claim 22, further comprising the step of connecting said door to said top wall by a fixed pin and connecting said door to said bottom wall by a retractable and extendable pin.
